# NOUVEAU FASCICULE DE BREVET EUROPEEN

(11) **EP 2 061 732 B2**
(45) Date de publication et mention de la décision concernant l'opposition: **15.06.2022**
(45) Mention de la délivrance du brevet: 28.04.2010
(21) Numéro de dépôt: 07823342.6
(22) Date de dépôt: 26.07.2007
(51) Int. Cl.: C04B 28/00, C04B 18/08

(54) **CIMENT GÉOPOLYMÉRIQUE À BASE DE CENDRES VOLANTES ET À GRANDE INNOCUITÉ D'EMPLOI.**
UNSCHÄDLICHER GEOPOLYMERZEMENT AUF DER BASIS VON FLUGASCHE
GEOPOLYMERIC CEMENT BASED ON FLY ASH AND HARMLESS TO USE

(30) Priorité: 28.07.2006 FR 0606923
(43) Date de publication de la demande: 27.05.2009
(73) Titulaire: Red Lion Cement Technology Limited, St Vincent and the Grenadines (GD)
(72) Inventeur: DAVIDOVITS, Joseph, 02100 Saint-Quentin (FR); DAVIDOVITS, Ralph, 02100 Saint-Quentin (FR); DAVIDOVITS, Marc, 02690 Essigny le Grand (FR)
(74) Mandataire: Regimbeau
(86) Numéro de dépôt international: PCT/FR2007/001285
(87) Numéro de publication internationale: WO 2008/012438

(56) Documents cités:
- EP-A2- 0 512 269
- WO-A-03/099738
- WO-A-2005/019130
- US-A- 5 084 102
- "EFA-Füller®" (version 11/2001)
- "EFA Füller®" (version 1/2011)
- DIN EN 450: 1995-01 (version allemande 1994)
- DIN EN 405-1: 2008-05 (version allemande 2005)
- IKEDA K.: 'Preparation of fly ash monoliths consolitated with a sodium silicate binder at ambient temperature' CEMENT AND CONCRETE RESEARCH vol. 27, no. 5, 1997, pages 657 - 663
- DUMITRU J. ET AL: 'Fly Ash-based geopolymeric binders' GEOPOLYMER, GREEN CHEMISTRY AND SUSTAINABLE DEVELOPMENT SOLUTIONS 2005, pages 127 - 130
- REES C. ET AL: 'The microstructural characterisation of geopolymers derived from fly ash solid silicates' GEOPOLYMER, GREEN CHEMICTRY AND SUSTAINABLE DEVELOPMENT SOLUTIONS 2005, pages 61 - 64
- RANGAN B.V. ET AL: 'SStudies on fly ash-based geopolymer concrete' GEOPOLYMER, GREEN CHEMISTRY AND SUSTAINABLE DEVELOPMENT SOLUTIONS 2005, pages 133-137 - 145-147, 149-152, 153-156
- XIE Z. ET AL: 'Hardening mechanisms of an alkaline-activated class F fly ash' CEMENT AND CONCRETE RESEARCH vol. 31, 2001, pages 1245 - 1249
- "Alkali-activated Fly Ash Geopolymeric Materials" F. Skvara et al.- Proceedings of the 11th International Congress on the Chemistry of Cement - Durban, May 2003
- DAVIDOVITS J. ET AL: 'World Resource Review', vol. 6, partie NO.2 1994 pages 263 - 278
- DAVIDOVITS J.: 'Geopolymers: Inorganic polymeric new materials' JOURNAL OF THERMAL ANALYSIS vol. 37, 1991, pages 1633 - 1656
- PAPADAKIS M. ET AL: 'Fabrication et Utilisation des Liants Hydrauliques', vol. 2ÈME ÉD., 1966 pages 198, - 201, 202
- ARRAMBIDE J.ET AL: 'Agrégats Liants et Bétons Hydrauliques Aciers et Métaux usuels', 1958, ÉDITIONS DU MONITEUR DES TRAVAUX PUBLICS, PARIS pages 171 - 172

## Description

La présente invention concerne un nouveau type de ciment géopolymérique destiné à la construction. Ce ciment est appelé ciment géopolymérique, car il est à base de géopolymère minéral, constitué d'alumino-silicates alcalins, plus connus sous l'appellation de poly(sialate), poly(sialate-siloxo) et/ou poly(sialate-disiloxo). Dans le cas de la présente invention, le ciment géopolymérique est à base de cendres volantes silico-alumineuses recueillies après la combustion du charbon dans les centrales électriques thermiques. Son durcissement s'effectue à la température ambiante.

### Techniques antérieures.

On distingue deux types de ciments : les ciments hydrauliques et les ciments géopolymériques. Les ciments géopolymériques résultent d'une réaction de polycondensation minérale, dite géosynthèse, par opposition aux liants traditionnels hydrauliques dans lesquels le durcissement est le résultat d'une hydratation des aluminates de calcium et des silicates de calcium.

Le terme poly(sialate) a été adopté pour désigner les géopolymères alumino-silicates. Le réseau sialate est constitué par des tétraèdres SiO₄ et AlO₄ alternativement liés par des atomes d'oxygène. Les cations (Na⁺, K⁺, Ca⁺⁺, H₃O⁺) présents dans les cavités structurales du poly(sialate) équilibrent la charge négative de Al³⁺en coordination (IV). La formule empirique des Polysialates est: Mₙ{-(SiO₂)_{z}-AlO₂}ₙ, wH₂O, avec M représentant le cation K, Na ou Ca et « n » le degré de polymérisation ; « z » est égal à 1, 2, 3 ou plus, jusque 32. Les polymères à réseau tridimensionnel (3D) sont de type:

| | | |
|---|---|---|
| Poly(sialate) Mₙ-(-Si-O-Al-O-)ₙ | M-PS | Si:Al=1:1 |
| Poly(sialate-siloxo) Mₙ-(Si-O-Al-O-Si-O-)ₙ | M-PSS | Si:Al=2:1 |
| Poly(sialate-disiloxo) Mₙ-(Si-O-Al-O-Si-O-Si-O-)ₙ | M-PSDS | Si:Al=3:1 |

Les liants ou ciments géopolymères de type poly(sialate), poly(sialate-siloxo) et/ou poly(sialate-disiloxo), ont fait l'objet de plusieurs brevets mettant en évidence leurs propriétés particulières. On peut citer par exemple les brevets français : FR 2.489.290, 2.489.291, 2.528.818, 2.621.260, 2.659.319, 2.669.918, 2.758.323 et 2.839.970.

Les ciments géopolymériques de l'art antérieur, WO 92/04298, WO 92/04299, WO 95/13995, WO 98/31644, WO 03/099738, sont le résultat d'une polycondensation entre trois réactifs minéraux distincts, c'est-à-dire :
a) l'oxyde aluminosilicate (Si₂O₅,Al₂O₂), ou métakaolin, résultant de la calcination d'argile kaolin aux environs de 750°C. Dans la présente description, nous le désignerons par MK-750.
b) le silicate de sodium ou de potassium avec un rapport molaire M₂O:SiO₂ compris entre 0,5 et 0,8, ce qui correspond à un rapport molaire SiO₂:M₂O compris entre 1,25 et 2, M désignant soit Na soit K. Comme dans l'art antérieur on utilise soit l'un, soit l'autre rapport molaire, nous emploierons les deux rapports dans la présente description.
c) le disilicate de calcium Ca(H₃SiO₄)₂
d) dans certains cas, on ajoute de la silice amorphe (fumée de silice) ou des alumino-silicates naturels (roches broyées d'origines diverses). Citons par exemple les brevets FR 2.758.323 et 2.839.970. Il s'agit de charges réactives enrobées dans la matrice géopolymérique résultant de la réaction entre les réactifs a)+b)+c).

Avec le disilicate de potassium et un rapport molaire M₂O:SiO₂ = 0,5 - disilicate alcalin de potassium K₂(H₃SiO₄)₂ -, la polycondensation est le résultat de la réaction chimique suivante :

2(Si₂O₅,Al₂O₂) + K₂(H₃SiO₄)₂ + Ca(H₃SiO₄)₂ ⇒ (K₂O,CaO)(8SiO₂,2Al₂O₃,nH₂O) (1)

Il se forme le (K,Ca)-Poly(sialate-siloxo), (K,Ca)-PSS avec Si:Al=2. Avec un rapport molaire M₂O:SiO₂ = 0,8, il se forme le (K,Ca)-Poly(sialate-disiloxo), (K,Ca)-PSDS.

Les réactifs a) et b) sont des produits industriels ajoutés dans le milieu réactionnel. Par contre, l'ingrédient c), le disilicate de calcium, se produit à l'état naissant, in situ, dans le milieu fortement alcalin. Il est en général issu de la réaction chimique entre un silicate de calcium comme la mellilite de calcium présente dans le laitier de haut fourneau.

Une des propriétés intéressantes des ciments géopolymériques est que, pendant leur fabrication, ils ne dégagent que très peu de gaz à effet de serre, le gaz carbonique CO₂. Au contraire, les ciments à base de clinker Portland, émettent énormément de gaz carbonique. Comme on peut le lire dans la publication intitulée Global Warming Impact on the Cement and Aggregates Industries, publiée dans World Resource Review, Vol.6, Nr 2, pp 263-278, 1994, une tonne de ciment Portland dégage 1 tonne de gaz CO₂, alors qu'un ciment géopolymérique en dégage 5 à 10 fois moins. En d'autres termes, dans le cadre des lois internationales limitant dans le futur le dégagement de CO₂, une cimenterie fabricant initialement du ciment Portland pourra produire 5 à 10 fois plus de ciment géopolymère, tout en émettant la même quantité de gaz CO₂. L'intérêt pour les ciments géopolymères est très évident pour l'économie des pays en développement.

On peut également obtenir un ciment géopolymère en employant un autre type de silico-aluminate, à savoir les cendres volantes, résidu industriel des centrales thermiques au charbon. Il existe cependant plusieurs types de cendres volantes selon qu'elles contiennent peu ou beaucoup de calcium, sous forme de CaO combiné aux silico-aluminates ou de chaux libre. En général, les cendres provenant de la combustion de la houille sont pauvres en chaux et sont appelées cendres de classe F, ou silico-alumineuses. Les cendres provenant de lignite sont riches en chaux et appartiennent à la classe C, ou calciques et sulfo-calciques. Le Tableau 1 reproduit quelques compositions chimiques de ces deux types de cendre. Dans le cadre de la présente invention, le ciment géopolymère est essentiellement obtenu à partir de cendres volantes de classe F, silico-alumineuses, de teneur en CaO inférieure à 4% en poids.

Les cendres volantes employées dans le cadre de la présente invention sont celles obtenues dans des chaudières brûlant à des températures supérieures à 1.000°C. La cendre se présente alors sous forme de petites sphères constituées essentiellement de parties vitreuses. Sont exclues du champ d'application de la présente invention les cendres résultant de la combustion à plus basse température ou en lit fluidisé, vers 750-1000°C. Ces cendres de basse température ne sont pas vitrifiées et certaines contiennent des silico-aluminates très proches du métakaolin MK-750 mentionné ci-après. Ce type de cendre appartient aux ciments géopolymériques de l'art antérieur et est mentionné dans le brevet FR 2,758,323, page 6, lignes 15-18..

**Tableau 1: Composition chimique, carbone déduit, de cendres volantes (d'après A. Jarrige, Les cendres volantes, propriétés - applications industrielles, ed. Eyrolles, Paris 1971)**

| | Cendres de houille (classe F) silico-alumineuses | Cendres de lignite (classe C) sulfo-calciques |
|---|---|---|
| SiO₂ | 47,2 à 54 | 18 à 24,8 |
| Al₂O₃ | 27,7 à 34,9 | 12,1 à 14,9 |
| Fe₂O₃ | 3,6 à 11,5 | 6,3 à 7,8 |
| CaO | 1,3 à 4,1 | 42,9 à 49 |
| dont chaux libre | 0,1 | 18 à 25 |
| MgO | 1,4 à 2,5 | 1,9 à 2,8 |
| SO₃ | 0,1 à 0,9 | 5,5 à 9,1 |
| Na₂O | 0,2 à 1,6 | 0,5 à 2 |
| K₂O | 0,7 à 5,7 | 1 à 3 |

On trouve dans l'art antérieur de nombreuses références employant les cendres volantes. Les auteurs décrivent en général une activation alcaline des cendres, ou activation chimique comme dans le brevet Silvestrim, US 5,601,643 (WO 96/25369). Depuis un temps récent cependant, ces mêmes ciments portent le titre de ciments géopolymères ou ciments géopolymèriques, comme les brevets Davidovits de l'art antérieur, par exemple le brevet Skvara "Geopolymer binder based on fly ash ", WO 03/078349, ou le brevet Nicholson "Geopolymers and methods for their production", WO 2005/019130.

Le Tableau 2 regroupe certains brevets représentatifs de l'art antérieur dans lesquels les cendres volantes sont, soit un élément secondaire, soit principal. On y trouve, pour chaque brevet, la nature des éléments réactionnels. L'emploi de ces éléments est visualisé par (XX) et son absence par (--) :
- MK-750, kaolin calciné ou oxyde aluminosilicate (Si₂O₅,Al₂O₂),
- laitier de haut fourneau,
- cendre volante de classe C ou F,
- silicate alcalin avec les deux rapports M₂O:SiO₂ et SiO₂:M₂O, M étant K ou Na,
- la température de géopolymérisation (durcissement): à l'ambiante (20°C) ou à l'étuve (20-95°C),
- le temps de durcissement dans l'étuve en heure,
- l'emploi d'activateur additionnel de réaction,
- l'innocuité d'emploi.

**Tableau 2 : Comparaison entre l'art antérieur et la présente invention.**

| | Présente invention | WO 03/ 099738 | WO 2005/ 019130 | US 508 4102 | US 464 2137 | CZ 289 735 | WO 03/ 078349 | WO 96/ 25369 |
|---|---|---|---|---|---|---|---|---|
| MK-750 | -- | XX | XX | -- | XX | XX | -- | -- |
| laitier | XX | XX | XX | XX | XX | XX | -- | -- |
| cendre | XX (F) | -- | XX (C,F)) | XX (F) | XX (C,F) | XX | XX (C) | XX (F) |
| silicate | | | | | | | | |
| M₂O:SiO₂ | 0,5-0,69 | 0,5-0,80 | 3,22 | 0,83-1,2 | 0,33 | 1,0-2,5 | 1,0-1,66 | 1,0-5,0 |
| SiO₂:M₂O | 1,45-2,0 | 1,25-2,0 | 0,31 | 0,8-1,20 | 3,0 | 0,4-1,0 | 0,6-1,0 | 0,2-1,0 |
| température | 20°C | 20°C | 90°C | 20 °C | 20°C | 60-70°C | 20-95°C | 60-90°C |
| temps | - | - | 12-18h | - | - | 8-12h | 8-12h | 15-60h |
| activateur | -- | -- | Borax | clinker | KOH + clinker | clinker | Ca++ | -- |
| **innocuité** | OUI | OUI + partielle | NON | NON | NON | NON | NON | NON |

### Définition de l'innocuité d'emploi :

Selon leur agressivité sur la peau et les organes de l'homme, on classe les produits chimiques et similaires en trois catégories :
- non irritant
- irritant
- corrosif ou toxique.

Les liants hydrauliques traditionnels, ciment Portland, laitier de haut fourneau, chaux éteinte, sont classés dans la catégorie "Irritant". La soude caustique NaOH, la potasse caustique KOH, la chaux vive CaO, sont classées "Corrosif". On définira par innocuité d'emploi, une formulation géopolymère qui répondra à la même classification que les liants hydrauliques, c'est-à-dire "Irritant". Cela exclut l'emploi de NaOH et KOH, qualifiées de corrosives, pour des usages courants dans le bâtiment et les travaux publics. Quant aux silicates alcalins de sodium et de potassium, on les classifie de "Corrosif" si le rapport molaire M₂O:SiO₂ est supérieur à 0,69, et le rapport SiO₂:M₂O inférieur à 1,45, M désignant Na et/ou K. Lorsque dans le milieu réactionnel géopolymérique le rapport M₂O:SiO₂ est inférieur à 0,69, et le rapport SiO₂:M₂O supérieur à 1,45, il est classé "Irritant". Un tel ciment géopolymère sera donc comparable à un liant hydraulique traditionnel. Dans la présente invention, on dit qu'il est doté d'une grande innocuité d'emploi. Nous avons aussi remarqué que, au contact avec les silico-aluminates employés dans les ciments géopolymériques, un mélange géopolymère dans lequel le rapport du silicate alcalin M₂O:SiO₂ est compris entre 0,69-0,78, et le rapport SiO₂:M₂O compris entre 1,28-1,45, ne montrait pas de corrosivité. Ceci est probablement dû à la présence d'une couche colloïdale protectrice. On emploiera dans ce cas l'appellation d'innocuité partielle. Pour résumer :

| | | |
|---|---|---|
| *- **innocuité*** | lorsque M₂O:SiO₂ <0,69 | et SiO₂:M₂O >1,45 |
| *- **innocuité partielle*** | lorsque 0,69<M₂O:SiO₂ <0,78 | et 1,28<SiO₂:M₂O <1,45 |

Le Tableau 2 indique si le ciment géopolymérique de l'art antérieur est doté d'une innocuité d'emploi, écrit OUI, ou est corrosif, écrit NON.

L'un des plus anciens brevets géopolymériques comprenant de la cendre volante est le brevet Heizmann US 4.642.137 et son compagnon US 4.640.715, décrivant une formulation en poudre destinée à être mélangée avec du ciment Portland ordinaire. Le silicate de potassium en poudre est le produit industriel de formule K₂O.3SiO₂.3H₂O auquel est ajouté de la potasse en écaille (ou en grain), car ce produit de rapport K₂O:SiO₂ = 3,0, et de rapport SiO₂:M₂O = 0,33 n'est pas suffisamment alcalin pour générer la géopolymérisation. La présence de potasse KOH est à elle seule dangereuse, car corrosive. Dans ces deux brevets, outre qu'il y a du MK-750, tous les exemples donnent le rapport final résultant du mélange du silicate de potasse et du KOH, K₂O:SiO₂ supérieur à 1,0, et le rapport SiO₂:M₂O inférieur à 1,0. Ce ciment est "Corrosif". Il n'y a pas d'innocuité d'emploi.

Le brevet Brouns Seratius US 5,084,102 décrit également un mélange en poudre de cendre de classe F, de laitier de haut fourneau de surface spécifique comprise entre 500-650 m²/kg, ce qui est très fin, et de métasilicate de sodium en poudre de formule Na₂O.SiO₂.5H₂O classé dans la catégorie "Corrosif". Il utilise également un activateur de prise, le clinker de ciment Portland. Le rapport du silicate alcalin M₂O:SiO₂ est voisin de 1,0, et le rapport SiO₂:M₂O voisin de 1,0. Ce ciment est "Corrosif". Il n'y a pas d'innocuité d'emploi.

Le brevet Silverstrim US 5,601 643 (WO 96/25369) ne comprend que des cendres volantes de classe F et du silicate alcalin avec de la soude NaOH. La température de géopolymérisation est de 60-90°C, pendant plus de 15 heures. Le rapport du silicate alcalin M₂O:SiO₂ est compris entre 1,0-5,0 et le rapport SiO₂:M₂O compris entre 0,2-1,0. Ce ciment est "Corrosif". Il n'y a pas d'innocuité d'emploi. Le plus curieux est que dans le texte de la description du brevet Silverstrim on suggère l'emploi de cette formulation hautement corrosive pour des travaux communs de bâtiment et de travaux publics, ce qui est une aberration, car les ouvriers devraient utiliser des vêtements protecteurs contre le risque d'accident chimique.

Dans le brevet Skvara CZ 289,735 on trouve tous les ingrédients minéraux, MK-750, laitier de haut fourneau de surface spécifique comprise entre 400-600 m2/kg, les cendres volantes de classe F, le silicate alcalin, avec en plus du ciment Portland comme activateur. Le durcissement s'effectue de préférence entre 60-90°C. Le rapport du silicate alcalin M₂O:SiO₂ est compris entre 1,0-2,5, et le rapport SiO₂:M₂O compris entre 0,4-1,0. Ce ciment est "Corrosif". Il n'y a pas d'innocuité d'emploi.

L'autre brevet Skvara WO 03/078349 emploie essentiellement les cendres volantes de classe C, c'est-à-dire riches en chaux libre. En outre, certains agents activateurs, essentiellement des sels de Calcium, c'est à dire des cations Ca++ de CaCO3, CaSO4 et de la chaux Ca(OH)2, favorisent le durcissement qui a lieu vers 60°C pendant 8 heures. Il n'y a pas de laitier de haut fourneau. Au contraire des revendications où le rapport SiO₂:M₂O est compris entre 0,6 et 1,5, dans les exemples, le silicate alcalin a le rapport M₂O:SiO₂ compris entre 1-1,66, et le rapport SiO₂:M₂O compris entre 0,6-1,0. Ici, tout comme dans le brevet suivant WO 2005/019130, la présence de chaux libre dans les cendres de classe C impose une très forte alcalinité si l'on veut éviter le phénomène de prise rapide, appelé aussi flash-set. Ce ciment est "Corrosif". Il n'y a pas d'innocuité d'emploi.

Le brevet Nicholson WO 2005/019130 est essentiellement destiné à l'utilisation de cendres volantes de classe C. On sait en effet que ce type de cendre riche en chaux durcit trop rapidement, quelquefois dans le mélangeur. Afin d'augmenter le temps d'utilisation du mélange géopolymérique, on y ajoute des sels de bore, comme le borax. La géopolymérisation se fait à 90°C pendant 16 heures. Dans les exemples de la description de ce brevet, le rapport molaire du silicate alcalin Na₂O:SiO₂ est égal à 3,2 et le rapport SiO₂:M₂O est égal à 0,31. Ce ciment est "Corrosif'. Il n'y a pas d'innocuité d'emploi.

Dans le brevet Davidovits WO 03/099738, il n'y a pas de cendres volantes. On emploie des silico-aluminates naturels comme des granits dégradés. Le silicate alcalin a le rapport M₂O:SiO₂ compris entre 0,5-08, et le rapport SiO₂:M₂O compris entre 1,28-2,0. Nous avons une innocuité partielle d'emploi pour le rapport 0,69<M₂O:SiO₂<0,78 et le rapport 1,28<SiO₂:M₂O <1,45. Pour le rapport M₂O:SiO₂ <0,69 et SiO₂:M₂O >1,45, ce ciment est classé "Irritant" et il est doté d'une grande innocuité d'emploi.

Citons enfin le brevet Fouché WO 93/16965 à base de cendres volantes de classe F, non présent dans le Tableau 2. Les réactifs alcalins sont fabriqués in situ dans le mélange réactionnel en faisant réagir entre eux le CO₃Na₂ et la chaux Ca(OH)₂. Il se forme une solution aqueuse de soude caustique NaOH. C'est une réaction chimique aussi vieille que l'Humanité, déjà employée dans l'Antiquité. Ensuite, la soude NaOH réagit avec de la silice amorphe (fumée de silice) pour produire le silicate alcalin. Mais, cette dernière réaction est très lente à température ambiante, elle demande plusieurs heures. Si bien que les conditions d'emploi de ce ciment géopolymérique sont extrêmement corrosives pendant toute la durée de la manutention, à cause de cette soude caustique NaOH. Il n'y a pas d'innocuité d'emploi.

### Exposé de l'invention

L'objet principal de l'invention est la description de ciments géopolymériques à base de cendres volantes qui, contrairement à l'art antérieur, sont dotés d'une grande innocuité d'emploi favorisant leur utilisation dans les applications communes du bâtiment et des travaux publics. L'intérêt industriel des ciments selon la présente invention est évident, si en plus on ajoute que leur fabrication n'exige que 9 fois moins d'énergie que celle du ciment Portland et qu'en plus, elle émet 8 à 10 fois moins de gaz à effet de serre CO₂.

La présente invention a également pour objet un ciment géopolymérique à base de cendres volantes silico-alumineuses de classe F dont la teneur en CaO est inférieure à 4% en poids et contenant un laitier de haut fourneau de surface spécifique inférieure à 400 m2/kg, de préférence inférieure à 380 m2/kg, ledit ciment étant doté d'une innocuité d'emploi et contenant une solution aqueuse de silicate alcalin dans laquelle le rapport molaire des oxydes M2O:SiO2 est inférieur à 0,78, et le rapport SiO2:M2O est supérieur à 1,28, M étant K ou Na, le durcissement s'effectuant à la température ambiante, et pour l'ensemble des constituants du ciment géopolymérique, le rapport molaire des oxydes :
M2O:SiO2 est compris entre 0,03 et 0,065
   et
H2O:M2O est compris entre 20 et 45.

Ces ciments géopolymères contiennent :
- réactif (I) : 10 à 15 parties en poids de solution de silicate alcalin contenant 45% à 55 % en poids d'eau, dans laquelle le rapport molaire M₂O:SiO₂ est inférieur à 0,78, de préférence inférieur à 0,69, et le rapport SiO₂:M₂O est supérieur à 1,28, de préférence supérieur à 1,45; M désignant Na ou K,
   et
- réactif (II) : 10 à 20 parties en poids d'eau
   et
- réactif (III) : 5 à 15 parties en poids de laitier de haut fourneau de surface spécifique inférieure à 400 m²/kg, de préférence inférieure à 380 m²/kg.
   et
- réactif (IV) : 50 à 100 parties en poids de cendres volantes silico-alumineuses de classe F, dont la teneur en CaO est inférieure à 4% en poids.

Le durcissement de ces ciments géopolymères à base de cendres volantes se fait à la température ambiante. Les résistances à la compression à 28 jours sont comprises entre 50 et 100 MPa.

Dans ces ciments géopolymériques à base de cendres volantes silico-alumineuses, le rapport entre la quantité de cendres volantes et la quantité de solution de silicate alcalin est supérieur à 4. Cependant, lorsque le silicate alcalin est le silicate de potassium, ce rapport entre la quantité de cendres volantes et la quantité de solution de silicate alcalin est supérieur à 5. On verra dans les exemples de cette description que ce rapport varie selon les cendres, étant de 6 ou plus. Cela représente un grand avantage, car cela permet l'emploi de silicate de potassium qui, selon l'art antérieur, génère des ciments ayant des propriétés bien supérieures à celles des ciments au silicate de sodium, à un coût économique équivalent.

Dans le cadre de la présente invention, pour l'ensemble des constituants du ciment géopolymérique, on obtient un rapport molaire des oxydes M₂O:SiO₂ compris entre 0,03 et 0,065 et H₂O:M₂O compris entre 20 et 45. La présence d'une grande quantité d'eau dans le mélange lui assure une excellente fluidité, sans diminuer les propriétés mécaniques. Ici aussi, comme précédemment, l'emploi de silicate de potassium permet d'employer plus d'eau de mélange, conduisant à un rapport molaire H₂O:K₂O supérieur à 30.

### Meilleures manières de réaliser l'invention

Ce nouveau ciment géopolymérique est un mélange des constituants suivants :
- Le réactif (I) est un silicate alcalin soluble dans l'eau. Depuis la description du brevet Davidovits (EP 0 153 097), l'homme de l'art sait que, dans ce silicate alcalin, le rapport molaire M₂O:SiO₂ (M désignant soit Na, soit K, soit le mélange Na+K) doit être voisin de 0,5, c'est à dire correspondre sensiblement à un silicate M₂O:2SiO₂,nH₂O, n étant compris entre 2 et 6. De préférence, dans la méthode de l'invention, M est K. Bien que le silicate de potassium soit plus coûteux que le silicate de sodium, les propriétés des ciments obtenus avec le silicate de potassium sont bien supérieures de celles obtenues avec le silicate de sodium. Dans la présente invention, le rapport molaire M₂O:SiO₂ est compris entre 0.5 et 0.78. Dans le cas des exemples ci-dessous, la solution de silicate alcalin contient 20-30% en poids de SiO₂, 15-26% en poids de K₂O ou de Na₂O, et 45-55% en poids d'eau. Elle peut être préparée à l'avance ou résulter de la dissolution d'un silicate alcalin solide avec l'eau ajoutée au mélange.
- Le réactif (III) est un silicate de calcium basique, c'est à dire avec le rapport atomique Ca/Si supérieur ou égal à 1, comme la wollastonite Ca(SiO₃), la gehlenite (2CaO.Al₂O₃.SiO₂), l'akermanite (2CaO.MgO.2SiO₂). Lorsque les grains de ces matières sont mis en contact avec le silicate alcalin du réactif (I), il se produit très rapidement une désorption de CaO de telle sorte que le rapport atomique Ca/Si devient inférieur à 1 et tend vers 0,5. Il y a production in situ de disilicate de calcium Ca(H₃SiO₄)₂ soluble qui vient participer à la réaction géopolymérique. Certains sous-produits de traitements industriels ou de combustion à haute température contiennent essentiellement les silicates basiques gehlenite, akermanite, wollastonite et conviennent donc très bien. On les retrouve dans le laitier de haut fourneau. Lorsque l'on regarde au microscope les ciments durcis à partir des mélanges décrits dans les exemples, on constate qu'une partie la plus fine des grains de laitiers a disparu. On voit seulement une empreinte de leur forme initiale, sous la forme d'une enveloppe vraisemblablement constituée d'akermanite qui n'a pas réagi. Ce processus est très régulier et peut être complet en 30 minutes, à la température ambiante. Mais, si le laitier est trop fin, par exemple si sa surface spécifique est de 400 m²/kg ou supérieur (ce qui correspond à une granulométrie moyenne d₅₀ de 10 microns) le durcissement du ciment géopolymérique est trop rapide. Or, dans l'art antérieur, il est surtout fait usage de laitier de surface spécifique comprise entre 400-600 m²/kg, soit d₅₀ inférieur à 10 microns comme dans le brevet WO 98/31644. Outre les brevets déjà cités dans le Tableau 2, on peut aussi mentionner les brevets Forss qui les premiers ont préconisé l'activation alcaline du laitier de haut-fourneau, par exemple le brevet US 4.306.912. Dans les brevets Forss, la surface spécifique est supérieure à 400 m²/kg, de préférence comprise entre 500 et 800 m²/kg. Ce n'est pas le cas dans la présente invention. De préférence, on prendra 5 à 15 parties en poids de laitier de haut fourneau de surface spécifique inférieure à 380 m²/kg ou d₅₀ compris entre 15 et 25 microns. Cela permet d'obtenir des durées de vie du mélange s'étalant entre 1-4 heures.
- Le réactif (IV) est une cendre volante silico-alumineuse de classe F, dont la teneur en CaO est inférieure à 4% en poids. Dans l'art antérieur, l'objectif était de dissoudre les cendres volantes afin de libérer les éléments réactifs silice et alumine. Cela exigeait des conditions réactionnelles corrosives et de la température. On ajoutait donc, en plus du silicate alcalin, de l'hydroxyde de sodium NaOH et/ou de potassium KOH en grande quantité. Au contraire, dans la présente invention, on pense que les particules de cendres volantes ne régissent qu'en surface, avec un mécanisme chimique différent. On se contente de réaliser une matrice géopolymère à l'aide de la réaction entre le réactif (I) et le réactif (III). Cette matrice géopolymère, de condition chimique non corrosive classée "irritant", est suffisamment réactive pour activer la surface des particules de cendre, engendrant une réaction géopolymérique de surface. On obtient ainsi un ciment géopolymérique doté d'une grande innocuité d'emploi.

Les ciments de la présente invention sont illustrés par les exemples suivants. Ils n'ont pas de caractère limitatif sur la portée globale de l'invention. Toutes les parties indiquées sont en poids.

### Exemple 1)

Lors de la réception d'une cendre volante au laboratoire, nous effectuons une mesure de son pH. Pour cela, 5 g de cendre sont dilués dans 50 g d'eau dé-ionisée. On note le pH à 1 minute, 5 minutes. Cela permet de savoir si, à cause de la présence de chaux libre ou de sulfate de Ca, le mélange géopolymérique risque de durcir dans le mélangeur, le phénomène du flash set. D'après notre expérience de laboratoire, lorsque l'on emploi une solution de silicate alcalin de rapport molaire M₂O:SiO₂ = 0,78, on peut effectuer la classification suivante pour les différentes cendres volantes :
pH < 8 : aucun danger de durcissement rapide. Il s'agit d'une cendre volante de classe F.
8<pH<10 : risque de durcissement rapide, mais pas de flash set. Il s'agit d'une cendre de classe C, a faible taux de chaux libre
pH>10 : risque de flash set. Il s'agit d'une cendre de classe C, avec un taux important de chaux libre.

Nous réceptionnons une cendre volante en provenance de Thaïlande (Mae Moh). La composition chimique est donnée par le Tableau 3. Le taux de CaO est de 10,0. Il s'agit donc d'une cendre de classe C. Le pH est mesuré; il est de 10,05. Il y a risque de durcissement rapide ou de flash set.

**Tableau 3 : Composition chimique de cendres volantes de Thaïlande (Mae Moh)**

| SiO₂ | Al₂O₃ | Fe₂O₃ | CaO | MgO | SO₃ | Na₂O | K₂O |
|---|---|---|---|---|---|---|---|
| 45,89 | 24,58 | 10,67 | 10,0 | 2,44 | 1,76 | 1,32 | 2,65 |

Pour
- 10 parties en poids de la solution de silicate alcalin de rapport K₂O:SiO₂ = 0,78, contenant 51% en poids d'eau. On ajoute
- 10 parties en poids d'eau, et
- 50 parties en poids de cendre de Thaïlande.
On remplit un moule et on regarde la vitesse de durcissement à la température ambiante. Le mélange durcit déjà au bout de 5 minutes. Cette cendre ne peut pas être utilisée pour un ciment géopolymérique selon l'invention.

### Exemple 2)

Nous réceptionnons une cendre volante en provenance de la République Tchèque (Opatovice). La composition chimique est donnée par le Tableau 4. Le taux de CaO est de 2,24. Il s'agit donc d'une cendre de classe F. Le pH est mesuré ; il est de 5,25. Il n'y a aucun risque de durcissement rapide.

**Tableau 4 : Composition chimique de cendres volantes de République Tchèque (Opatovice).**

| SiO₂ | Al₂O₃ | Fe₂O₃ | CaO | MgO | SO₃ | Na₂O | K₂O |
|---|---|---|---|---|---|---|---|
| 52,94 | 33,08 | 6,27 | 2,24 | 0,93 | 0,25 | 0,25 | 1,75 |

Pour
- 10 parties en poids de la solution de silicate alcalin de rapport K₂O:SiO₂ = 0,78, contenant 51% en poids d'eau. On ajoute
- 10 parties en poids d'eau, et
- 50 parties en poids de cendre Tchèque.

On remplit un moule et on regarde la vitesse de durcissement à la température ambiante. Le mélange ne durcit pas après 45 minutes. Cette cendre peut être utilisée pour un ciment géopolymérique selon l'invention.

On fait alors le mélange suivant :
- 10 parties en poids de la solution de silicate alcalin de rapport K₂O:SiO₂ = 0,78, contenant 51% en poids d'eau.
- 10 parties en poids d'eau,
- 50 parties en poids de cendre Tchèque,
- 15 parties en poids de laitier de haut fourneau de surface spécifique 390 m²/kg.

On remplit des moules qui sont ensuite fermés, puis laissés à durcir à la température ambiante. La résistance à la compression à 28 jours est de 70 MPa.

### Exemple 3

Nous réceptionnons une cendre volante en provenance d'Australie (Perth). La composition chimique est donnée par le Tableau 5. Le taux de CaO est de 2,42. Il s'agit donc d'une cendre de classe F. Le pH est mesuré ; il est de 5,05. Il n'y a aucun risque de durcissement rapide.

**Tableau 5 : Composition chimique de cendres volantes d'Australie (Perth, Collie Power)**

| SiO₂ | Al₂O₃ | Fe₂O₃ | CaO | MgO | SO₃ | Na₂O | K₂O |
|---|---|---|---|---|---|---|---|
| 47,80 | 24,40 | 17,40 | 2,42 | 1,19 | 0,29 | 0,31 | 0,55 |

Pour
- 10 parties en poids de la solution de silicate alcalin de rapport K₂O:SiO₂ = 0,78, contenant 51% en poids d'eau. On ajoute
- 10 parties en poids d'eau, et
- 50 parties en poids de cendre Australienne.

On remplit un moule et on regarde la vitesse de durcissement à la température ambiante. Le mélange ne durcit pas après 45 minutes. Cette cendre peut être utilisée pour un ciment géopolymérique selon l'invention.

On fait alors le mélange suivant :
- 10 parties en poids de la solution de silicate alcalin de rapport K₂O:SiO₂ = 0,78, contenant 51% en poids d'eau.
- 10 parties en poids d'eau,
- 60 parties en poids de cendre Australienne,
- 15 parties en poids de laitier de haut fourneau de surface spécifique 390 m²/kg.

On remplit des moules qui sont ensuite fermés, puis laissés à durcir à la température ambiante. La résistance à la compression à 28 jours est de 80 MPa.

Cette cendre volante Australienne est intéressante, car elle nous permet de bien montrer la différence entre la méthode de l'art antérieur (voir le Tableau 2) et les ciments géopolymériques selon la présente invention. En effet, cette cendre a été utilisée par l'équipe de chercheurs de l'Université Technologique Curtin de Perth, sous la direction de V.J. Rangan, pour faire une étude complète sur le comportement du ciment à base de cendre volante et des bétons ainsi obtenus, selon la technique de l'art antérieur.

Les résultats ont été publiés dans plusieurs revues scientifiques et ont fait l'objet d'une présentation très détaillée lors du World Congress GEOPOLYMER 2005. On les trouve sous la forme de 4 articles rédigés dans le livre "Geopolymer, Green Chemistry and Sustainable Development solutions" publié par le Geopolymer Institute, 02100 Saint-Quentin, France (www.geopolymer.org) aux pages : 133-137, 145-147, 149-152, 153-156. Les essais furent faits dans les conditions suivantes :

La solution alcaline de silicate de sodium est obtenue en ajoutant des solutions de soude NaOH, 8M, 12 M et 14 M. On aboutit à des rapports molaires du silicate alcalin suivant :

| NaOH | 8M | 12M | 14M |
|---|---|---|---|
| Na₂O:SiO₂ | 0,78 | 0,91 | 0,99 |
| SiO₂:Na₂O | 1,28 | 1,08 | 1,01 |

Les propriétés mécaniques (résistance à la compression) sont fonction de l'alcalinité et de la température de durcissement pendant environ 24 heures. Ainsi :

| Température | | 30°C | | 60°C | | 90°C | |
|---|---|---|---|---|---|---|---|
| | Na₂O:SiO₂ | | | | | | |
| | 0,78 | | 20 MPa | | 57 MPa | | 65 MPa |
| | 1,01 | | 30 MPa | | 70 MPa | | 70 MPa |

Le rapport entre la quantité de cendre volante et la quantité de silicate alcalin est de 2,83.

Le rapport molaire H₂O:Na₂O est de 10 et s'il augmente à 12,5, la résistance à la compression chute de 70 MPa (à 90°C) à 45 MPa (à 90°C). Le rapport molaire Na₂O:SiO₂ de tous les éléments constituants le ciment géopolymérique est 0,097 à 0,11.

On peut comparer ces conditions opératoires selon l'art antérieur avec celles selon la présente invention. Nous fixerons la résistance à la compression à 70-80 MPa.

**Tableau 6 : comparaison entre l'art antérieur et la présente invention, résistance à la compression = 70-80MPa, avec la même cendre Australienne.**

| | art antérieur | Exemple 3, présente invention |
|---|---|---|
| Type de silicate | Silicate de sodium | Silicate de potassium |
| M₂O:SiO₂ | Na₂O:SiO₂ = 0,99 | K₂O:SiO₂ = 0,78 et 0,69 |
| SiO₂:M₂O | SiO₂:Na₂O = 1,01 | SiO₂:K₂O = 1,28 et 1,45 |
| Innocuité d'emploi | non | Oui |
| Rapport cendre: silicate alcalin | 2,83 | 6,0 |
| Rapport molaire H₂O:M₂O | 10 | 35 à 40 |
| M₂O:SiO₂, tous les constituants | 0,097 à 0,11 | 0,043 à 0,055 |

On constate que, dans l'art antérieur, le rapport M₂O:SiO₂ englobant tous les constituants est plus de 2 fois plus élevé que celui de la présente invention. L'art antérieur utilise donc 2 fois plus d'éléments alcalins M₂O que la présente invention.

### Exemple 4

On reprend le mélange de l'Exemple 3, mais on remplace le silicate de potassium par du silicate de sodium. Il ne faut augmenter que de 30% environ la quantité de silicate alcalin pour obtenir les mêmes propriétés, en gardant toujours l'innocuité d'emploi, car on conserve pour le silicate alcalin le même rapport M₂O:SiO₂ = 0,78 ou 0,69. Ainsi le rapport cendre : silicate de sodium devient 4,6 au lieu de 6,0; le rapport molaire H₂O:Na₂O passe de 40 à 28. Le rapport molaire M₂O:SiO₂ englobant tous les constituants change de 0,043 à 0,060, mais reste très inférieur à l'art antérieur du Tableau 6.

### Exemple 5

On fait le mélange suivant :
- 13,5 parties en poids de la solution de silicate alcalin de rapport K₂O:SiO₂ = 0,54, contenant 55% en poids d'eau.
- 10 parties en poids d'eau,
- 60 parties en poids de cendre Australienne,
- 15 parties en poids de laitier de haut fourneau de surface spécifique 390 m2/kg.

On remplit des moules qui sont ensuite fermés, puis laissés à durcir à la température ambiante. La résistance à la compression à 28 jours est de 70 MPa.

Le ciment géopolymérique est classé "Irritant" et est doté d'une grande innocuité d'emploi.

Selon les conditions expérimentales et l'emploi de silicate de Na ou de silicate de K, la quantité de laitier peut varier de 5 à 15 parties en poids. Il en résulte que le rapport entre la quantité de cendres volantes et la quantité de solution de silicate alcalin est supérieur à 4. Cependant, lorsque le silicate alcalin est le silicate de potassium, ce rapport entre la quantité de cendres volantes et la quantité de solution de silicate alcalin est supérieur à 5. Ce rapport varie selon les cendres, pouvant être de 6 ou plus. Cela représente un grand avantage, car cela permet l'emploi de silicate de potassium qui, selon l'art antérieur, génère des ciments ayant des propriétés bien supérieures à celles des ciments au silicate de sodium, à un coût économique équivalent.

Si l'on considère l'ensemble des constituants du ciment géopolymérique, on obtient un rapport molaire des oxydes M₂O:SiO₂ compris entre 0,03 et 0,065 et H₂O:M₂O compris entre 20 et 45. La présence d'une grande quantité d'eau dans le mélange lui assure une excellente fluidité, sans diminuer les propriétés mécaniques. Ici aussi, comme précédemment, l'emploi de silicate de potassium permet d'employer plus d'eau de mélange, conduisant à un rapport molaire H₂O:K₂O supérieur à 30.

Il est intéressant de comparer la dépense en énergie ainsi que l'émission en gaz a effet de serre CO₂ entre les ciments Portland traditionnels et le ciment géopolymérique selon la présente invention

| | | | |
|---|---|---|---|
| Dépense en énergie, en MJ/tonne | | | |

| type | calcination | broyage | total |
|---|---|---|---|
| Portland | 3200 | 430 | 3430 |
| géopolymérique | 200 | 190 | 390 |

| | |
|---|---|
| Émission en gaz à effet de serre, CO₂ en tonne/tonne | |

| Portland | 1.00 |
|---|---|
| géopolymérique | 0.05-0.10 |

La fabrication de ciment géopolymérique à base de cendres volantes silico-alumineuses de classe F, n'exige que 9 fois moins d'énergie que celle du ciment Portland ; en plus, elle émet 8 à 10 fois moins de gaz à effet de serre CO₂. Contrairement à l'art antérieur, ces ciments géopolymériques à base de cendres volantes, sont également dotés d'une grande innocuité d'emploi favorisant leur utilisation dans les applications communes du bâtiment et des travaux publics. L'intérêt industriel des ciments selon la présente invention est donc évident.

## Revendications

1. Ciment géopolymérique à base de cendres volantes silico-alumineuses de classe F dont la teneur en CaO est inférieure à 4% en poids et contenant un laitier de haut fourneau de surface spécifique inférieure à 400 m²/kg, de préférence inférieure à 380 m²/kg, **caractérisé en ce qu'**il est doté d'une innocuité d'emploi et qu'il contient une solution aqueuse de silicate alcalin dans laquelle le rapport molaire des oxydes M₂O:SiO₂ est inférieur à 0,78, et le rapport SiO₂:M₂O est supérieur à 1,28, M étant K ou Na, le durcissement s'effectuant à la température ambiante, et **en ce que** pour l'ensemble des constituants du ciment géopolymérique, le rapport molaire des oxydes :
M₂O:SiO₂ est compris entre 0,03 et 0,065
et
H₂O:M₂O est compris entre 20 et 45.

2. Ciment géopolymérique à base de cendres volantes silico-alumineuses selon la revendication 1), **caractérisé en ce que** lorsque le silicate alcalin est le silicate de potassium, le rapport molaire H₂O:K₂O est supérieur à 30.

3. Ciment géopolymérique à base de cendres volantes silico-alumineuses selon la revendication 1) ou 2), **caractérisé en ce que** lorsque la solution de silicate alcalin possède un rapport molaire des oxydes M₂O:SiO₂ inférieur à 0,69, et un rapport SiO₂:M₂O supérieur à 1,45, le ciment géopolymère est doté d'une grande innocuité d'emploi.

4. Ciment géopolymérique à base de cendres volantes silico-alumineuses selon l'une quelconque des revendications 1) à 3), **caractérisé en ce qu'**il contient :
a) 10 à 15 parties en poids de solution de silicate alcalin contenant 45% à 55 % en poids d'eau, dans laquelle le rapport molaire M₂O:SiO₂ est inférieur à 0,78, de préférence inférieur à 0,69, et le rapport SiO₂:M₂O est supérieur à 1,28, de préférence supérieur à 1,45, M désignant Na ou K,
et
b) 10 à 20 parties en poids d'eau
et
c) 5 à 15 parties en poids de laitier de haut fourneau de surface spécifique inférieure à 400 m²/kg, de préférence inférieure à 380 m²/kg.
et
d) 50 à 100 parties en poids de cendres volantes silico-alumineuses de classe F, dont la teneur en CaO est inférieure à 4% en poids.

5. Ciment géopolymérique à base de cendres volantes silico-alumineuses selon la revendication 4), **caractérisé en ce que** le rapport entre la quantité de cendres volantes et la quantité de solution de silicate alcalin est supérieur à 4.

6. Ciment géopolymérique à base de cendres volantes silico-alumineuses selon la revendication 4), **caractérisé en ce que** lorsque le silicate alcalin est le silicate de potassium, le rapport entre la quantité de cendres volantes et la quantité de solution de silicate alcalin est supérieur à 5.

## Patentansprüche

1. Geopolymerzement bestehend aus Aluminiumsilikatflugasche der F-Klasse, deren CaO Gehalt niedriger als 4% Gewichtanteile ist, und der eine Hochofenschlacke mit spezifischer Oberfläche unter 400 m²/kg enthält, vorzugsweise unter 380 m²/kg, **dadurch gekennzeichnet, dass** er bei der Verwendung als unschädlich angesehen werden kann und eine wässrige Lösung alkalischen Silikats enthält, in der das Molekularverhältnis der Oxide M₂O:SiO₂ niedriger als 0,78 und das Verhältnis SiO₂:M₂O höher als 1,28 ist, wobei M gleich K oder Na ist, und die Verhärtung wird durchgeführt bei Raumtemperatur, und dass für alle Bestandteile des geopolymerzements das Molekularverhältnis der Oxide:
M₂O:SiO₂ zwischen 0,03 und 0,065
und
H₂O:M₂O zwischen 20 und 45 liegt.

2. Geopolymerzement bestehend aus Aluminiumsilikatflugasche nach Anspruch 1), **dadurch gekennzeichnet, dass** wenn das alkalische Silikat aus Kaliumsilikat besteht, das Molekularverhältnis H₂O:K₂O höher als 30 ist.

3. Geopolymerzement bestehend aus Aluminiumsilikatflugasche nach Anspruch 1) oder 2), **dadurch gekennzeichnet, dass** wenn die alkalische Silikatlösung ein Molekularverhältnis der Oxide M₂O:SiO₂ niedriger als 0,69 hat und ein Molekularverhältnis der Oxide SiO₂:M₂O höher als 1,45, dann zeigt der Geopolymerzement eine sehr hohe Unschädlichkeit bei der Verwendung.

4. Geopolymerzement bestehend aus Aluminiumsilikatflugasche nach einem der Ansprüche 1) bis 3), **dadurch gekennzeichnet, dass** er enthält:
a) 10 bis 15 Gewichtsanteile alkalische Silikatlösung, die 45% bis 55% Wasser enthält, in der das Molekularverhältnis der Oxide M₂O:SiO₂ niedriger als 0,78 vorzugsweise unter 0,69 liegt und das Verhältnis der Oxide SiO₂:M₂O höher als 1,28 vorzugsweise höher als 1,45 ist, wobei M, Na oder K bezeichnet,
und
b) 10 bis 20 Gewichtsanteile Wasser,
und
c) 5 bis 15 Gewichtsanteile Hochofenschlacke mit spezifischer Oberfläche unter 400 m²/kg vorzugsweise unter 380 m²/kg
und
d) 50 bis 100 Gewichtsanteile Aluminiumsilikatflugasche der F-Klasse, deren Gehalt von CaO niedriger als 4% Gewichtanteile ist.

5. Geopolymerzement bestehend aus Aluminiumsilikatflugasche nach Anspruch 4), **dadurch gekennzeichnet, dass** das Anteilverhältnis zwischen der Menge der Flugasche und der Menge der alkalischen Silikatlösung höher als 4 ist.

6. Geopolymerzement bestehend aus Aluminiumsilikatflugasche nach Anspruch 4) **dadurch gekennzeichnet, dass** wenn das alkalische Silikat aus Kaliumsilikat besteht, das Anteilverhältnis zwischen der Menge der Flugasche und der Menge der Lösung des alkalischen Silikats höher als 5 ist.

## Claims

1. Geopolymeric cement based on aluminosilicate fly ashes of class F in which the CaO content is less than 4% by weight, and containing a blast furnace slag with a specific surface area less than 400 m²/kg, preferably less than 380 m²/kg, **characterized in that** it is harmless to use and contains an aqueous alkali silicate solution in which the oxides molar ratio M₂O:SiO₂ is less than 0,78, and the ratio SiO₂:M₂O is greater than 1,28, M representing K or Na, the hardening occurring at room temperature, and **in that** for all constituents of the geopolymeric cement, the oxides molar ratio:
M₂O:SiO₂ is ranging between 0,03 and 0,065
and
H₂O:M₂O is ranging between 20 and 45.

2. Geopolymeric cement based on aluminosilicate fly ashes according to claim 1), **characterized in that**, when the alkali silicate is the potassium silicate, the H₂O:K₂O molar ratio is greater than 30.

3. Geopolymeric cement based on aluminosilicate fly ashes according to claim 1) or 2), **characterized in that**, when the alkali silicate solution has a M₂O:SiO₂ oxides molar ratio less than 0,69, and a SiO₂:M₂O ratio greater than 1,45, said geopolymeric cement is very harmless to use.

4. Geopolymeric cement based on aluminosilicate fly ashes according to any one of claims 1) to 3), **characterized in that** it contains:
a) 10 to 15 parts by weight of alkali silicate solution containing 45% to 55% by weight of water, in which the M₂O:SiO₂ molar ratio is less than 0,78, preferably less than 0,69, and the SiO₂:M₂O ratio is greater than 1,28, preferably greater than 1,45, M denoting Na or K.
and
b) 10 to 20 parts by weight of water
and
c) 5 to 15 parts by weight of blast furnace slag with a specific surface area less than 400 m²/kg, preferably less than 380 m²/kg.
and
d) 50 to 100 parts by weight of aluminosilicate fly ashes of class F, in which the CaO content is less than 4% by weight.

5. Geopolymeric cement based on aluminosilicate fly ashes according to claim 4), **characterized in that** the relationship between the quantity of fly ashes and the quantity of alkali silicate solution is greater than 4.

6. Geopolymeric cement based on aluminosilicate fly ashes according to claim 4), **characterized in that**, when the alkali silicate is the potassium silicate, the relationship between the quantity of fly ashes and the quantity of alkali silicate solution is greater than 5.
